# EUROPÄISCHE PATENTANMELDUNG

(11) **EP 1 120 308 A1**
(43) Veröffentlichungstag der Anmeldung: **01.08.2001**
(21) Anmeldenummer: 00250442.1
(22) Anmeldetag: 19.12.2000
(51) Int. Cl.: B60N 3/08

(54) **Ausstattungsteil für Fahrzeuge**

(30) Priorität: 27.01.2000 DE 10004352
(71) Anmelder: Volkswagen AG, 38436 Wolfsburg (DE)
(72) Erfinder: König,Roger, Dipl.-Ing., 38124 Braunschweig (DE); Schwarzkopf, Bernd, 91207 Lauf/Schönberg (DE)
(74) Vertreter: Meyer, Hans-Joachim

(57) **Zusammenfassung**

Die Erfindung betrifft ein Ausstattungsteil, insbesondere ein Ablagefach, eine Münzbox oder einen Aschenbecher usw. für Fahrzeuge, mit einem Gehäuse (4) und mindestens einem an dem Gehäuse schwenkbar gelagerten Deckel (5; 6), der aus einer Schließlage in eine Offenlage und zurück in die Schließlage schwenkbar und in der Offenlage zumindest teilweise in einen Zwischenraum eingetaucht ist. Um den den Schwenkmechanismus beinhaltenden Zwischenraum gegen Verschmutzung oder das Eindringen von Kleinteilen zu schützen, ist erfindungsgemäß vorgesehen, daß mit dem Deckel (5; 6) Hebel gekoppelt sind, die beim Öffnen des Deckels (5; 6) am Gehäuse (4) entstehende Fugen schließen. Alternativ oder zusätzlich kann dem Deckel (5) ein am Gehäuse (4) schwenkbar gelagerter Innendeckel (37) zugeordnet sein, dessen Oberkante mittels eines federelastischen Elements gegen die Unterseite des Deckels (5) gedrückt ist, so daß die Oberkante des Innendeckels (37) während der Öffnungs- bzw. Schließbewegung schleifend an der Unterseite des Deckels (5) anliegt.

## Beschreibung

Die Erfindung betrifft ein Ausstattungsteil, insbesondere ein Ablagefach, eine Münzbox oder einen Aschenbecher usw. für Fahrzeuge, mit einem Gehäuse und mindestens einem an dem Gehäuse schwenkbar gelagerten Deckel, der aus einer Schließlage in eine Offenlage und zurück in die Schließlage schwenkbar und in der Offenlage zumindest teilweise in einen Zwischenraum eingetaucht ist.

Derartige Ausstattungsteile sind beispielsweise aus der DE 297 04 374 U1 und der DE 35 02 797 C2 bekannt.

In der DE 35 02 797 C2 ist ein Einbau-Aschenbecher für Kraftfahrzeuge beschrieben, der ein Gehäuse, einen im Gehäuse angeordneten Aschenbehälter sowie einen am Gehäuse schwenkbar gelagerten und den Aschenbecher in der geschlossenen Stellung abdeckenden Deckel aufweist. Der Deckel besteht aus zwei Deckelteilen, die über gegenläufig miteinander kämmende Zahnräder miteinander verbunden sind, derart, daß sich bei einer Bewegung des einen Deckelteils in die geöffnete oder geschlossene Stellung der andere Deckelteil ebenfalls in die geöffnete bzw. geschlossene Stellung bewegt. Die Deckelteile schwenken dabei seitlich um den Aschenbehälter herum und sind in der Offenlage in einen Zwischenraum zwischen dem Gehäuse und dem Aschenbehälter teilweise eingetaucht. Dieser Einbau-Aschenbecher benötigt zwar relativ wenig Einbauvolumen, nachteilig ist jedoch, daß der zwischen dem Gehäuse und dem Aschenbecher vorhandene Zwischenraum, in welchem der Schwenkmechanismus angeordnet ist, durch beim Öffnen der Deckelteile am Gehäuse entstehende Fugen offenliegt und somit insbesondere durch Zigarettenasche verschmutzen kann. Auch können gegebenenfalls Kleinteile über die Fugen in den den Schwenkmechanismus beinhaltenden Zwischenraum gelangen und dort Störungen verursachen.

Aufgabe der vorliegenden Erfindung ist es, ein Ausstattungsteil der eingangs genannten Art dahingehend zu verbessern, daß der den Schwenkmechanismus beinhaltende Zwischenraum gegen Verschmutzung oder das Eindringen von Kleinteilen weitestgehend geschützt ist.

Diese Aufgabe wird erfindungsgemäß dadurch gelöst, daß mit dem Deckel Hebel gekoppelt sind, die beim Öffnen des Deckels am Gehäuse entstehende Fugen abdecken.

Des weiteren wird diese Aufgabe erfindungsgemäß auch dadurch gelöst, daß dem Deckel ein am Gehäuse schwenkbar gelagerter Innendeckel zugeordnet ist, dessen Oberkante mittels eines federelastischen Elements gegen die Unterseite des Deckels gedrückt ist, so daß die Oberkante des Innendeckels während der Öffnungs- bzw. Schließbewegung schleifend an der Unterseite des Deckels anliegt. Auf diese Weise wird verhindert, daß Schmutz oder Kleinteile in den den Schwenkmechanismus des Deckels beinhaltenden Zwischenraum gelangen können.

Eine bevorzugte Ausgestaltung des erfindungsgemäßen Ausstattungsteils besteht darin, daß der Deckel seitlich um das Gehäuse herum schwenkbar ist, wobei der Zwischenraum, in den der Deckel in der Offenlage zumindest teilweise eingetaucht ist, durch das Gehäuse und eine mit dem Gehäuse verbindbare Verkleidung, die eine durch den Deckel verschließbare Öffnung aufweist, definiert ist. Diese Ausgestaltung ermöglicht eine kompakte Bauweise sowie eine relativ einfache Montierbarkeit des erfindungsgemäßen Ausstattungsteils.

Eine weitere bevorzugte Ausgestaltung der Erfindung besteht darin, daß der Deckel mit Schwenkarmen versehen ist, an denen miteinander fluchtende Zapfen angeordnet sind, die jeweils in eine am Gehäuse ausgebildete bogenförmige Führung eingreifen, wobei die Hebel an dem Gehäuse drehbar gelagert sind und ein Ende des Hebels jeweils am Deckel angelenkt ist. Hierdurch läßt sich in zuverlässiger Weise eine Bewegungskopplung des Deckels mit den Hebeln erzielen, welche die beim Öffnen des Deckels am Gehäuse entstehenden Fugen schließen.

Nach einer weiteren Ausgestaltung ist vorgesehen, daß die Hebel unterhalb von am Deckel ausgebildeten Fugenabdeckungen angelenkt sind, die in der Offenlage des Deckels mit an den Hebeln ausgebildeten Fugenabdeckungen eine im wesentlichen geschlossene Fläche bilden. Diese Ausgestaltung verhindert bei besonders kompakter Bauweise das Eindringen von Schmutz bzw. Kleinteilen in den den Schwenkmechanismus enthaltenden Zwischenraum des Ausstattungsteils.

Weitere bevorzugte und vorteilhafte Ausgestaltungen der Erfindung sind in den Unteransprüchen gekennzeichnet.

Nachfolgend wird die Erfindung anhand einer mehrere Ausführungsbeispiele darstellenden Zeichnung näher erläutert. Es zeigen:
- Fig. 1: eine schematische Vorderansicht auf ein Ausstattungsteil für ein Kraftfahrzeug, das einen Aschenbecher und einen Zigarettenanzünder aufweist,
- Fig. 2: eine schematische Seitenansicht auf das Ausstattungsteil gemäß Fig. 1,
- Fig. 3: eine perspektivische Ansicht auf das Ausstattungsteil gemäß Fig. 1 ohne äußere Verkleidung,
- Fig. 4: eine perspektivische Ansicht auf die äußere Verkleidung des Ausstattungsteils gemäß Fig. 1,
- Fig. 5: eine Explosionsdarstellung des Ausstattungsteils gemäß Fig. 1 ohne äußere Verkleidung,
- Fig. 6: eine schematische Seitenansicht auf ein Fahrzeugausstattungsteil gemäß einem weiteren Ausführungsbeispiel, das einen Aschenbecher und einen Zigarettenanzünder aufweist, und
- Fig. 7: eine schematische Seitenansicht auf das Ausstattungsteil gemäß Fig. 6, wobei sich die dem Aschenbecher und dem Zigarettenanzünder zugeordneten Deckel jeweils in der Offenlage befinden.

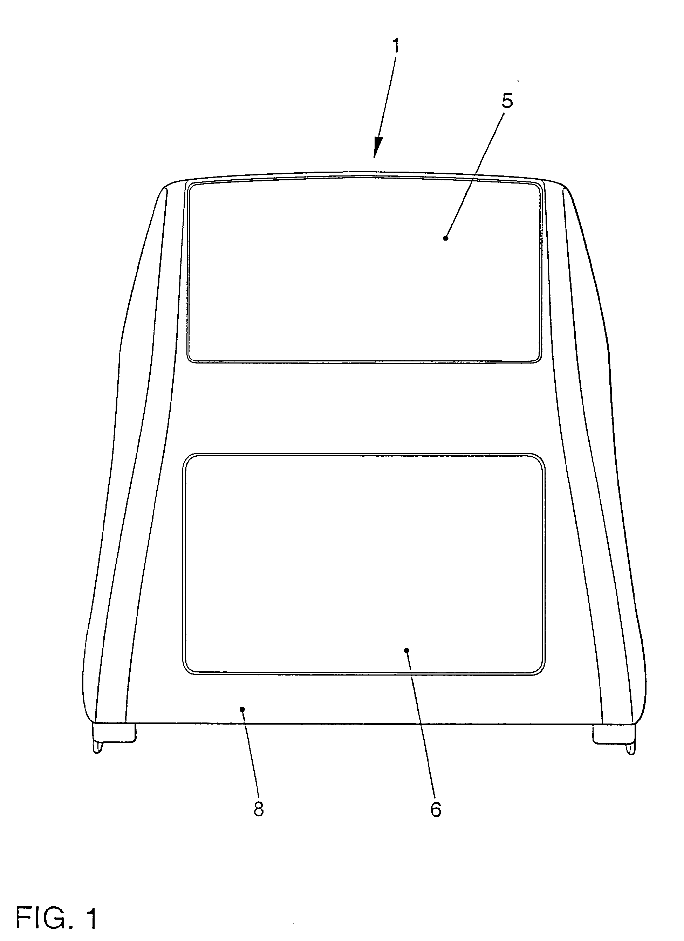

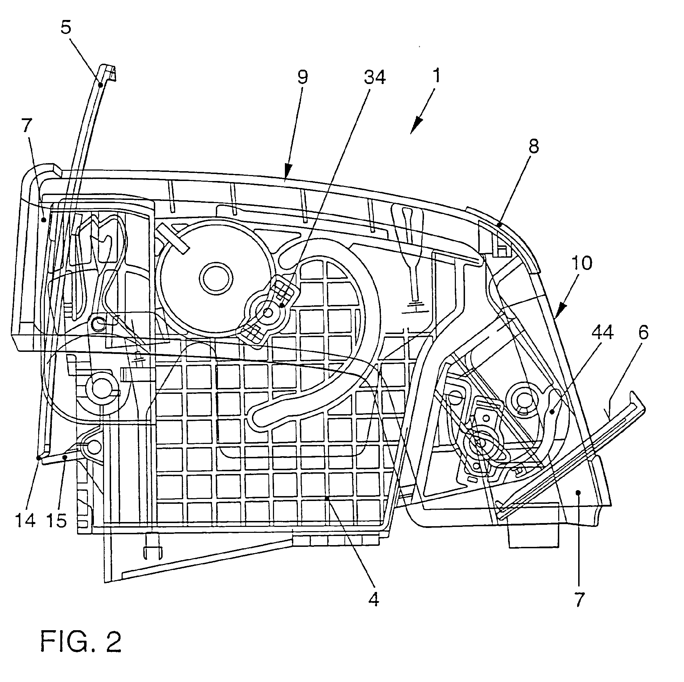

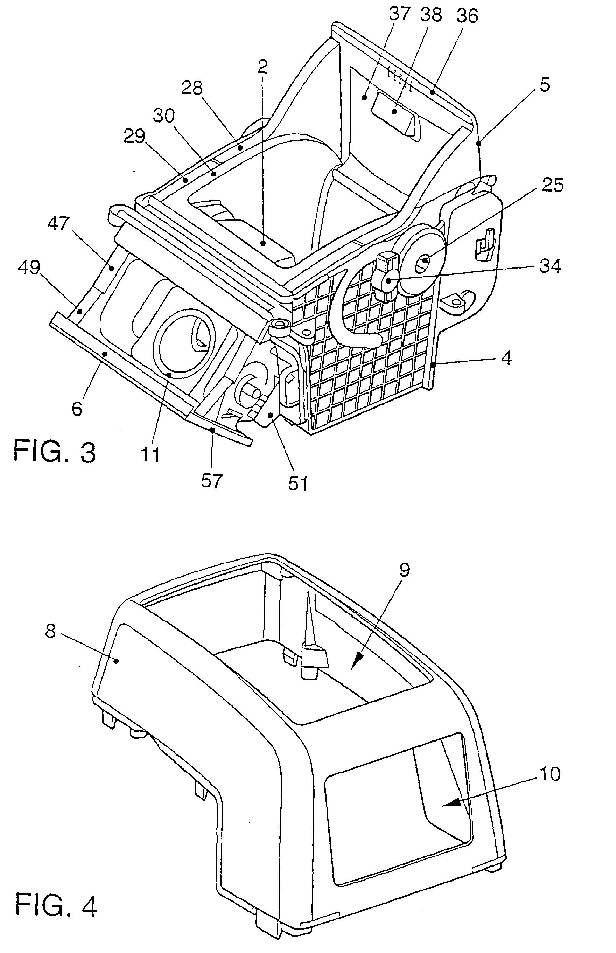

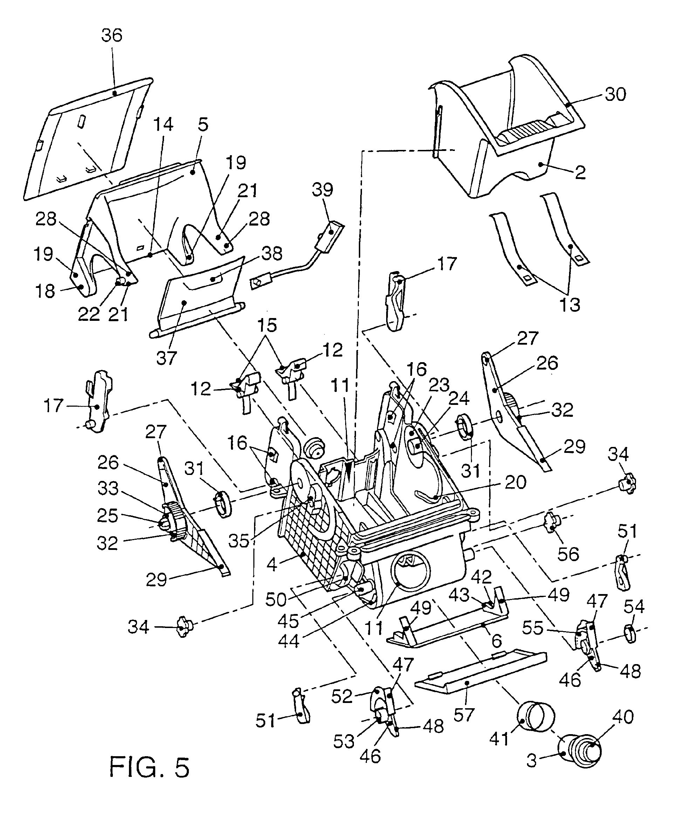

Das in der Zeichnung dargestellte Ausstattungsteil 1 weist einen Aschenbecher 2 und einen Zigarettenanzünder 3 auf, die in einem gemeinsamen Gehäuse 4 gelagert sind und jeweils durch einen an dem Gehäuse 4 schwenkbar gelagerten Deckel 5 bzw. 6 verdeckt werden können (vgl. Fig. 5). In Fig. 1 befinden sich die Deckel 5, 6 jeweils in ihrer Schließlage, während in den Figuren 2 und 3 ihre Offenlage dargestellt ist. Es ist zu erkennen, daß die Deckel 5, 6 jeweils seitlich um das Gehäuse 4 herum schwenkbar und in der Offenlage etwa zu drei Viertel in einen Zwischenraum 7 eingetaucht sind, der durch das Gehäuse 4 und eine mit dem Gehäuse 4 verbindbare äußere Verkleidung 8 definiert ist. Die Verkleidung 8 weist durch die Deckel 5, 6 verschließbare Öffnungen 9, 10 auf und kann an dem Gehäuse 4 mittels Schrauben oder dergleichen befestigt werden (vgl. Fig. 4).

Die an der Oberseite der Verkleidung 8 ausgebildete Öffnung 9 stellt den Zugang zu dem in das Gehäuse 4 einsetzbaren Aschenbecher 2 dar, während die an der Vorderseite der Verkleidung 8 angeordnete Öffnung 10 dem in einer kreisrunden Gehäuseöffnung 11 montierten Zigarettenanzünder 3 zugeordnet ist. Der Aschenbecher 2 wird in der zugeordneten Gehäusevertiefung 11 durch schwenkbar am Gehäuse 4 gelagerte Verrieglungshebel 12 gesichert, wobei an der Unterseite des Aschenbechers 2 am Gehäuseboden befestigte Hubfedern 13 angreifen. Wie in Fig. 2 zu erkennen ist, greift die hintere Kante 14 des Deckels 5 in der Offenlage an nach hinten abstehenden Betätigungsabschnitten 15 der Verrieglungshebel 12 an, so daß diese durch ein manuelles Verschwenken des Deckels 5 außer Eingriff mit dem Aschenbecher 2 gebracht werden können. Der Aschenbecher 2 wird dann aufgrund der Hubfedern um einen bestimmten Betrag aus der Gehäusevertiefung 11 angehoben, so daß er bequem ergriffen und gegebenenfalls geleert werden kann.

An den Innenseiten des Gehäuses 4 sind miteinander fluchtende Ausnehmungen 16 zur schwenkbaren Befestigung von Führungselementen 17 mit herzkurvenförmigen Führungsbahnen vorgesehen. In diese Führungsbahnen greift der Deckel 5 mit Zapfen 18 ein, die an den Außenseiten von hinteren Schwenkarmen 19 des Deckels 5 ausgebildet sind.

Ferner sind an den Innenseiten der Gehäusevertiefung 11 bogenförmige Führungsnuten 20 ausgebildet, in die der Deckel 5 mit an vorderen Schwenkarmen 21 ausgebildeten Zapfen 22 eingreift. Des weiteren weisen die Innenseiten des Gehäuses 4 ringförmige Vertiefungen 23 auf, die zwischen den bogenförmigen Führungsnuten 20 und den hinteren, schwenkbar gelagerten Führungselementen 17 angeordnet sind. Die ringförmigen Vertiefungen 23 sind mit hülsenförmigen Zapfen 24 versehen, in die geschlitzte, elastisch zusammendrückbare Rastzapfen 25 aufweisende Hebel 26 drehbar einrastbar sind. Die Hebel 26 weisen an einem ihrer beiden Enden elastische Schnappelemente 27 auf, mit denen sie an entsprechenden Zapfen (nicht gezeigt) des Deckels 5 angelenkt sind. Diese Zapfen sind an den vorderen Schwenkarmen 21 des Deckels 5 unterhalb von im Querschnitt U-förmigen Abdeckungen 28 angeordnet, wobei die die elastischen Schnappelemente 27 aufweisenden Enden der Hebel 26 in die U-förmigen Abschnitte der Schwenkarme 21 beweglich eingreifen. Die anderen Enden der Hebel 26 sind mit streifenförmigen Fugenabdeckungen 29 versehen, die beim Öffnen des Deckels 5 zwischen dem Gehäuse 4 und dem Aschenbecher 2 entstehende Fugen schließen. Entsprechendes gilt für die an den vorderen Schwenkarmen 21 des Deckels 5 ausgebildeten Abdeckungen 28. Es ist zu erkennen, daß in der Offenlage des Deckels 5 die an den Hebeln 26 ausgebildeten Fugenabdeckungen 29 zusammen mit den den an den vorderen Schwenkarmen 21 des Deckels 5 ausgebildeten Fugenabdeckungen 28 und den flanschartig ausgebildeten Seitenrändern 30 des Aschenbechers 2 eine im wesentlichen glatte, geschlossene Fläche bilden (vgl. Fig. 3).

In den ringförmigen Vertiefungen 23 der Gehäuseinnenseiten sind jeweils Federn 31 angeordnet, die einerseits mit dem Gehäuse 4 und andererseits mit dem jeweiligen Hebel 26 verbunden sind. Die Hebel 26 sind ferner mit Verzahnungssegmenten 32 versehen, die konzentrisch zu den geschlitzten Rastzapfen 25 angeordnet und in den ringförmigen Vertiefungen 23 der Gehäuseinnenseiten schützend aufgenommen sind. Die Federn 31 sind dabei konzentrisch zwischen den Verzahnungssegmenten 32 und den die geschlitzten Rastzapfen 25 umgebenden Hülsenabschnitten 33 angeordnet.

Die gelenkige Verbindung der Hebel 26 mit dem Deckel 5 bewirkt, daß der Deckel 5 gegen die Kraft der Federn 31 in die Schließlage überführbar und in dieser aufgrund der herzkurvenförmigen Führungsbahnen der Führungselemente 17 rastbar ist. Nach der Entrastung in der Schließlage bewegt sich der Deckel 5 infolge der Federkraft selbsttätig in die Offenlage. Um dabei ein schlagartiges Öffnen des Deckels 5 zu verhindern, sind Silikonbremsen 34 vorgesehen, die mit den Verzahnungssegmenten 32 der Hebel 26 kämmen und in im Gehäuse 4 ausgebildeten Ausnehmungen 34 formschlüssig befestigt sind.

In Fig. 5 ist ferner zu erkennen, daß an der Außenseite des Deckels 5 eine aufrastbare Dekorblende 36 befestigbar ist, während der Innen- bzw. Unterseite des Deckels 5 ein am Gehäuse 4 schwenkbar gelagerter Innendeckel 37 zugeordnet ist, der mit einer haubenförmig ausgeformten Ausnehmung 38 zur Aufnahme einer Beleuchtungseinrichtung 39 versehen ist.

Der in das Gehäuse 4 eingebaute Zigarettenanzünder 3 hat einen zylindrischen Außenmantel mit einem daran befestigten radial abstehenden Flansch 40, der an der Außenseite der kreisrunden Gehäuseöffnung 11 anliegt. An der Innenseite des Gehäuses 4 wird der Zigarettenanzünder 3 durch eine auf den Zylindermantel formschlüssig aufsteckbare Spannhülse 41 gesichert.

Der dem Zigarettenanzünder 3 zugeordnete Deckel 6 weist Schwenkarme 42 auf, an deren Innenseiten miteinander fluchtende Zapfen 43 angeordnet sind, die in an den Außenseiten des Gehäuses 4 ausgebildeten Nuten 44 beweglich eingreifen. Neben den Nuten 44 sind an den Gehäuseaußenseiten vorstehende Gelenkzapfen 45 angeordnet. Auf den Gelenkzapfen 45 sind mit dem Deckel 6 gekoppelte Hebel 46 schwenkbar gelagert, die beim Öffnen des Deckels 6 zwischen dem Gehäuse 4 und der Verkleidung 8 entstehende Fugen mittels streifenförmiger Flächenelemente 47 schließen. Die Hebel 46 sind an ihren einen Enden über elastische Schnappverbindungen 48 an dem Deckel 6 angelenkt. Der Deckel 6 weist hierzu an seinen Schwenkarmen 42 Verbindungszapfen (nicht gezeigt) auf, die unterhalb von streifenförmigen Abdeckungen 49 angeordnet sind. Die Abdeckungen 49 bilden in der Offenlage des Deckels 6 zusammen mit an den Hebeln 46 ausgebildeten Fugenabdeckungen 47 eine streifenförmige, im wesentlichen geschlossene Fläche.

Am Gehäuse 4 sind ferner bügelartige Befestigungselemente 50 ausgebildet, an denen herzkurvenförmige Führungsbahnen aufweisende Führungselemente 51 schwenkbeweglich gelagert sind. In die herzkurvenförmigen Führungsbahnen greifen Zapfen 52 ein, die an den den elastischen Schnappverbindungen 48 gegenüberliegenden Enden der Hebel 46 angeordnet sind. Die Hebel 46 sind mit hülsenförmigen Lagerabschnitten 53 versehen, mit denen sie schwenkbar auf den Gelenkzapfen 45 sitzen. Auf dem rechten hülsenförmigen Lagerabschnitt 53 ist eine Feder 54 aufgesteckt, die einerseits mit dem Hebel 46 und andererseits mit dem Gehäuse 4 verbunden ist. Der dem Zigarettenanzünder 3 zugeordnete Deckel 6 kann gegen die Kraft der Feder 54 in die Schließlage überführt und in dieser aufgrund der herzkurvenförmig ausgeführten Führungsbahn des Führungselements 51 verrastet werden. Nach entsprechender Entrastung bewegt sich der Deckel infolge der Federkraft selbsttätig in die Offenlage. Um ein schlagartiges Öffnen des Deckels 6 zu verhindern, ist der rechte Hebel 46 mit einem Verzahnungssegment 55 ausgestattet, das mit einer am Gehäuse 4 befestigten Silikonbremse 56 kämmt.

Auch der Deckel 6 ist an seiner Außenseite mit einer aufrastbaren Dekorblende 57 versehen.

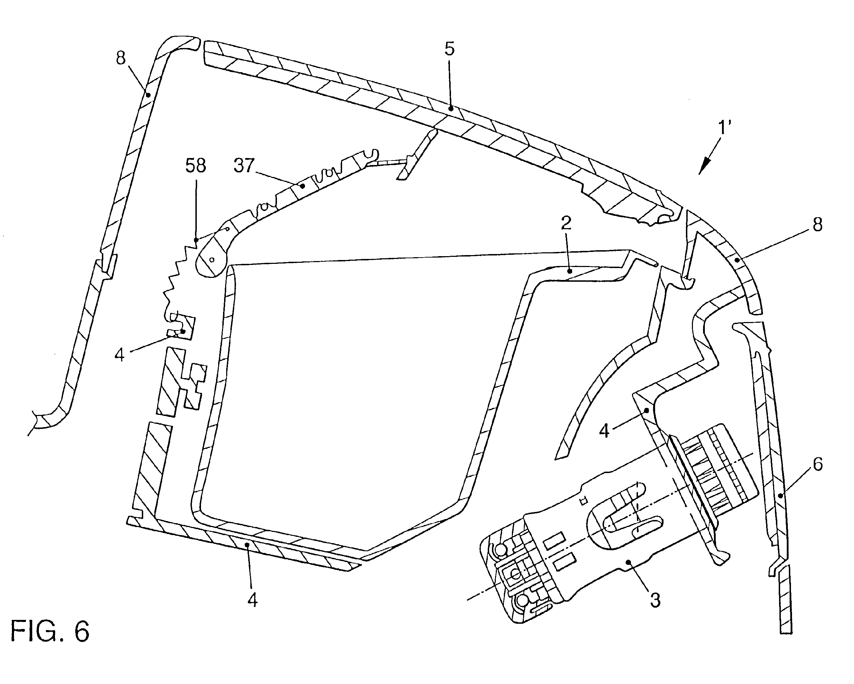

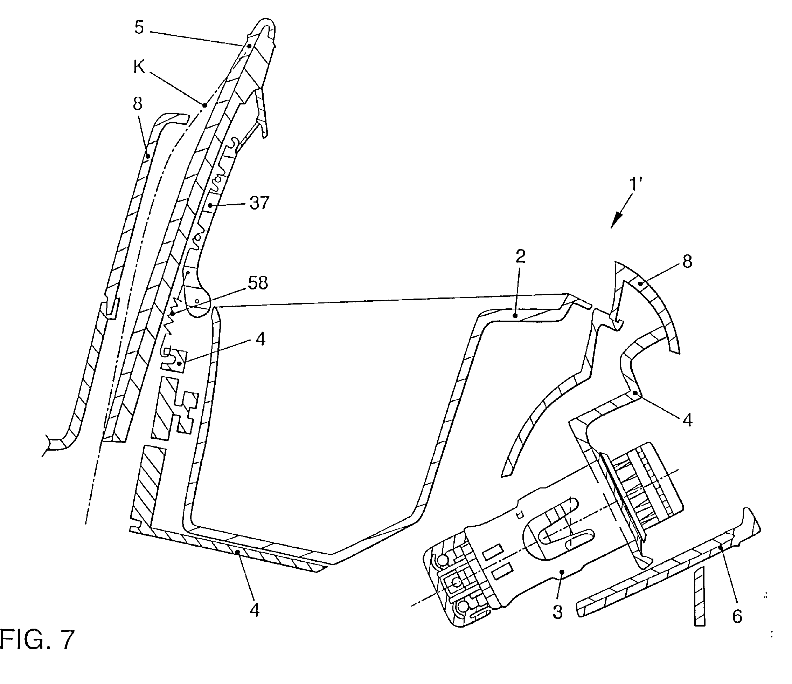

Ein weiteres Ausführungsbeispiel eines erfindungsgemäßen Ausstattungsteils 1' ist in den Figuren 6 und 7 dargestellt. Dieses Ausstattungsteil 1' weist wiederum einen Aschenbecher 2 und einen Zigarettenanzünder 3 auf, die in einem gemeinsamen Gehäuse 4 gelagert sind und jeweils durch einen an dem Gehäuse 4 schwenkbar gelagerten Deckel 5 bzw. 6 verdeckt werden können. Es ist zu erkennen, daß die hintere Kante des Aschenbechers 2 abgesenkt ist, um den Kurvenverlauf K der Öffnungsbewegung des Deckels 5 zu ermöglichen. Bei geschlossenem Deckel 5 könnten aufgrund der Absenkung der hinteren Aschenbecherkante Schmutz oder Deckel 5 bzw. der Verkleidung 8 gelangen, die gegebenenfalls die Öffnungsbewegung des Deckels 5 behindern würden. Um dies auszuschließen, ist dem Deckel 5 ein am Gehäuse 4 schwenkbar gelagerter Innendeckel 37 zugeordnet, dessen Oberkante mittels einer Zugfeder 58 gegen die Unterseite des Deckels 5 gedrückt wird, so daß die Oberkante des Innendeckels 37 während der Öffnungs- bzw. Schließbewegung schleifend an der Unterseite des Deckels 5 anliegt. Der Innendeckel 37, in dem vorzugsweise auch eine Lichtquelle integriert sein kann, ist über Zapfen drehbar am Gehäuse 4 gelagert. Das eine Ende der Zugfeder 58 ist an der nicht sichtbaren Seite des Innendeckels 37 eingehängt, während das andere Ende der Zugfeder 58 an der hinteren Gehäusewand befestigt ist.

Durch den federbelasteten Innendeckel 37 ist sichergestellt, daß der Freiraum zwischen der hinteren Kante des Aschenbechers 2 und dem Deckel 5 bzw. der Verkleidung 8 immer vollständig geschlossen ist.

Im übrigen kann dieses Ausstattungsteil entsprechend dem mit Bezug auf die Figuren 1 und 5 beschriebenen Ausstattungsteil ausgebildet sein.

### BEZUGSZEICHENLISTE

- 1: Ausstattungsteil
- 2: Aschenbecher
- 3: Zigarettenanzünder
- 4: Gehäuse
- 5: Deckel
- 6: Deckel
- 7: Zwischenraum
- 8: Verkleidung
- 9: Öffnung
- 10: Öffnung
- 11: Gehäusevertiefung
- 12: Verrieglungshebel
- 13: Hubfeder
- 14: hintere Deckelkante
- 15: Betätigungsabschnitt
- 16: Ausnehmung
- 17: Führungselement
- 18: Zapfen
- 19: hinterer Schwenkarm
- 20: bogenförmige Führungsnut
- 21: vorderer Schwenkarm
- 22: Zapfen
- 23: ringförmige Vertiefung
- 24: hülsenförmiger Zapfen
- 25: Rastzapfen
- 26: Hebel
- 27: Schnappelement
- 28: Abdeckung
- 29: Fugenabdeckung
- 30: flanschartiger Rand
- 31: Feder
- 32: Verzahnungssegment
- 33: Hülsenabschnitt
- 34: Silikonbremse
- 35: Ausnehmung
- 36: Dekorblende
- 37: Innendeckel
- 38: Ausnehmung
- 39: Beleuchtungseinrichtung
- 40: Flansch
- 41: Spannhülse
- 42: Schwenkarm
- 43: Zapfen
- 44: Nut
- 45: Gelenkzapfen
- 46: Hebel
- 47: Flächenelement
- 48: Schnappverbindung
- 49: Abdeckung
- 50: Befestigungsbügel
- 51: Führungselement
- 52: Zapfen
- 53: hülsenförmiger Lagerabschnitt
- 54: Feder
- 55: Verzahnungssegment
- 56: Silikonbremse
- 57: Dekorblende
- 58: Zugfeder

## Patentansprüche

1. Ausstattungsteil, insbesondere ein Ablagefach, eine Münzbox oder ein Aschenbecher usw. für Fahrzeuge, mit einem Gehäuse (4) und mindestens einem an dem Gehäuse schwenkbar gelagerten Deckel (5; 6), der aus einer Schließlage in eine Offenlage und zurück in die Schließlage schwenkbar und in der Offenlage zumindest teilweise in einen Zwischenraum (7) eingetaucht ist, **dadurch gekennzeichnet**, daß mit dem Deckel (5; 6) Hebel (26; 46) gekoppelt sind, die beim Öffnen des Deckels (5; 6) am Gehäuse (4) entstehende Fugen schließen.

2. Ausstattungsteil nach Anspruch 1 oder dem Oberbegriff des Anspruchs 1, **dadurch gekennzeichnet**, daß dem Deckel ein am Gehäuse (4) schwenkbar gelagerter Innendeckel (37) zugeordnet ist, dessen Oberkante mittels eines federelastischen Elements (58) gegen die Unterseite des Deckels (5) gedrückt ist, so daß die Oberkante des Innendeckels während der Öffnungs- bzw. Schließbewegung schleifend an der Unterseite des Deckels (5) anliegt.

3. Ausstattungsteil nach Anspruch 2, **dadurch gekennzeichnet**, daß das federelastische Mittel (58) eine Zugfeder ist, deren eines Ende am Gehäuse (4) und deren anderes Ende an der im montierten Zustand des Ausstattungsteils nicht sichtbaren Seite des Innendeckels (37) befestigt ist.

4. Ausstattungsteil nach einem der Ansprüche 1 bis 3, **dadurch gekennzeichnet**, daß der Deckel seitlich um das Gehäuse (4) herum schwenkbar ist, wobei der Zwischenraum (7), in den der Deckel in der Offenlage zumindest teilweise eingetaucht ist, durch das Gehäuse (4) und eine mit dem Gehäuse (4) verbindbare Verkleidung (8), die eine durch den Deckel (5; 6) verschließbare Öffnung (9; 10) aufweist, definiert ist.

5. Ausstattungsteil nach einem der Ansprüche 1 bis 4, **dadurch gekennzeichnet**, daß der Deckel (5; 6) in der Offenlage etwa zu drei Viertel in den Zwischenraum (7) eingetaucht ist.

6. Ausstattungsteil nach einem der Ansprüche 1 bis 5, **dadurch gekennzeichnet**, daß der Deckel (5; 6) mit Schwenkarmen (21; 42) versehen ist, an denen miteinander fluchtende Zapfen (22; 43) angeordnet sind, die jeweils in eine am Gehäuse (4) ausgebildete bogenförmige Führung (20; 44) eingreifen, wobei die Hebel (26; 46) an dem Gehäuse (4) drehbar gelagert sind und ein Ende des jeweiligen Hebels ( 26; 46) am Deckel ( 5; 6) angelenkt ist.

7. Ausstattungsteil nach einem der Ansprüche 1 bis 6, **dadurch gekennzeichnet**, daß die Hebel (26; 46) unterhalb von am Deckel (5; 6) ausgebildeten Fugenabdeckungen (28; 49) angelenkt sind, die in der Offenlage des Deckels (5; 6) mit an den Hebeln (26; 46) ausgebildeten Fugenabdeckungen (29; 47) eine im wesentlichen geschlossene Fläche bilden.

8. Ausstattungsteil nach einem der Ansprüche 1 bis 7, **dadurch gekennzeichnet**, daß der Deckel (5; 6) gegen die Kraft einer Feder (31; 54) in die Schließlage überführbar und in dieser rastbar ist und sich nach Entrastung infolge der Federkraft selbsttätig in die Offenlage bewegt.

9. Ausstattungsteil nach einem der Ansprüche 1 bis 8, **dadurch gekennzeichnet**, daß mindestens einer der Hebel (26; 46) ein Verzahnungssegment (32; 55) aufweist, das mit einer Silikonbremse (34; 56) kämmt.
